# EUROPEAN PATENT APPLICATION

(11) **EP 4 721 580 A1**
(43) Date of publication of application: **08.04.2026**
(21) Application number: 23939761.5
(22) Date of filing: 01.09.2023
(51) Int. Cl.: A23L 5/00, A23C 11/10, A23F 5/24, A23L 11/00, A23L 11/60, A23L 11/65, A23L 19/12, A23L 25/00, A23L 27/00, C12G 1/00

(54) **METHOD FOR PRODUCING ALDEHYDE COMPOUND AND APPLICATION THEREOF**

(30) Priority: 26.05.2023 JP 2023087202
(71) Applicant: Amano Enzyme Inc., Nagoya-shi Aichi 460-8630 (JP)
(72) Inventor: SATO Yukihide, Kakamigahara-shi, Gifu 509-0109 (JP)
(74) Representative: Witthoff Jaekel Steinecke Patentanwälte PartG mbB
(86) International application number: PCT/JP2023/032117
(87) International publication number: WO 2024/247292

(57) **Abstract**

It is an object of the present invention to provide a method for generating an aldehyde compound in food products and beverages containing amino acids. The present invention relates to a method for producing an aldehyde compound, including allowing multicopper oxidase to act on food products and beverages or materials for food products and beverages, containing an amino acid or an analogue thereof. In addition, the present invention relates to: an improver for the flavor of food products and beverages, containing a mediator and multicopper oxidase; a method for improving the flavor of food products and beverages, including allowing a mediator and multicopper oxidase to act on food products and beverages or materials for food products and beverages, containing an amino acid or an analogue thereof; and an aldehyde compound-generating composition, containing a mediator, multicopper oxidase, and amino acid or a derivative thereof.

## Description

### Technical Field

The present invention relates to a method for producing an aldehyde compound, an improver for the flavor of food products and beverages, a method for improving the flavor of food products and beverages, and an aldehyde compound-generating composition.

### Background Art

Maillard reaction, which occurs between sugars and amino acids, greatly contributes to the aroma components of food products. Strecker degradation, which occurs together with the Maillard reaction, causes generation of aldehydes from amino acids. Since amino acid-derived aldehydes have a characteristic aroma and a relatively low threshold, they are used as raw materials for flavorings, medicaments, pesticides, artificial sweeteners, etc. For example, since phenylacetaldehyde, a Strecker degradation product, has a sweet aroma, a rose-like aroma, and a fresh aroma, phenylacetaldehyde is mainly used as a raw material for preparing flavors in flavorings and food products. Furthermore, phenylacetaldehyde has been reported to have antibacterial activity (Non-Patent Document 1). Further, methional, a Strecker degradation product, has been reported to exhibit a salt-reducing effect and an *umami-*enhancing effect (Patent Documents 1 to 3, and Non-Patent Documents 2 and 3).

Various researches have been conducted on a method for producing aldehydes via Strecker degradation. Patent Document 4 discloses a method for producing a Maillard flavor composition in a structured lipid phase, using reducing sugars and amino groups.

### Prior Art Documents

### Patent Documents

Patent Document 1: International Publication WO2014/014093
Patent Document 2: International Publication WO2013/172049
Patent Document 3: JP Patent Publication No. 2011-83262 A
Patent Document 4: JP Patent Publication No. 2011-526781 A

### Non-Patent Documents

Non-Patent Document 1: Antibacterial Properties of the Sasayuri Flower Fragrance Offered at the Saegusa Festival, Ecological Society of Japan, 64th National Conference (March 2017, Tokyo)
Non-Patent Document 2: Factors Determining Deliciousness of Meat, Journal of Nutrition, 60 (3), 119-129, 2002
Non-Patent Document 3: Kyushu University Institutional Repository

### Summary of Invention

### Objects to be Solved by the Invention

As described above, methods for generating aldehyde compounds utilizing enzymes have been known. However, there is still room for improvement in methods for improving the flavor of food products by allowing aldehyde-generating enzymes to act on food products and beverages containing amino acids. In addition, it has been desired to establish an efficient method for producing aldehyde compounds that takes safety and the environment into consideration.

Thus, it is an object of the present invention to provide a method for generating an aldehyde compound in food products and beverages containing amino acids.

### Means for Solving the Objects

Examples of specific aspects of the present invention will be described below.

[1] A method for producing an aldehyde compound, including allowing multicopper oxidase to act on food products and beverages or materials for food products and beverages, containing an amino acid or an analogue thereof.
[2] The method for producing an aldehyde compound according to[1], in which the amino acid or the analogue thereof includes isoleucine.
[3] The method for producing an aldehyde compound according to [1] or [2], in which the amino acid or the analogue thereof includes tryptophan.
[4] The method for producing an aldehyde compound according to any one of [1] to [3], in which the multicopper oxidase is laccase derived from Trametes sp.
[5] The method for producing an aldehyde compound according to any one of [1] to [4], in which allowing the multicopper oxidase to act is carried out in the presence of a mediator, and the mediator is a compound containing a ring structure having at least one hydroxyl group.
[6] The method for producing an aldehyde compound according to [5], in which the mediator is a compound containing a ring structure having at least one hydroxyl group and an alkoxy group, or a compound containing a ring structure having two or more hydroxyl group.
[7] An improver for the flavor of food products and beverages, containing a mediator and multicopper oxidase, in which
   the mediator is a compound containing a ring structure having at least one hydroxyl group.
[8] The improver for the flavor of food products and beverages according to [7], in which the multicopper oxidase is laccase derived from Trametes sp.
[9] A method for improving the flavor of food products and beverages, including allowing a mediator and multicopper oxidase to act on food products and beverages or materials for food products and beverages, containing an amino acid or an analogue thereof, in which
   the mediator is a compound containing a ring structure having at least one hydroxyl group.
[10] The method for improving the flavor of food products and beverages according to [9], in which the amino acid or the analogue thereof includes isoleucine.
[11] The method for improving the flavor of food products and beverages according to [9] or [10], in which the amino acid or the analogue thereof includes tryptophan.
[12] The method for improving the flavor of food products and beverages according to any one of [9] to [11], in which the multicopper oxidase is laccase derived from Trametes sp.
[13] An aldehyde compound-generating composition, containing multicopper oxidase, and amino acid or a derivative thereof.
[14] The aldehyde compound-generating composition according to [13], further containing a mediator.
[15] The aldehyde compound-generating composition according to [14], in which the mediator is a compound containing a ring structure having at least one hydroxyl group.
[16] The aldehyde compound-generating composition according to [14] or [15], in which the mediator is a compound that is contained in at least one type selected from the group consisting of a tea extract and an apple extract.
[17] The aldehyde compound-generating composition according to [13] to [16], in which the multicopper oxidase is laccase.
[18] The aldehyde compound-generating composition according to any one of [13] to [17] in which the amino acid or the analogue thereof is at least one type selected from the group consisting of methionine, isoleucine, tryptophan and phenylalanine.

Moreover, the present invention has the following configurations.
[A] An aldehyde compound, produced by the method for producing an aldehyde compound according to any one of the above [1] to [6].
[B] An enzyme agent containing a mediator containing a ring structure having at least one hydroxyl group and multicopper oxidase, which is for use in the improvement of the flavor of food products and beverages or materials for food products and beverages
[C] Use of an enzyme agent containing a mediator containing a ring structure having at least one hydroxyl group and multicopper oxidase, for improving the flavor of food products and beverages or materials for food products and beverages.
[D] A composition, containing a mediator, multicopper oxidase, an amino acid or an analogue thereof, for generation of an aldehyde compound.
[E] Use of a composition, containing a mediator, multicopper oxidase, an amino acid or an analogue thereof, for generation of an aldehyde compound.

### Advantageous Effects of Invention

According to the present invention, an aldehyde compound can be generated in food products and beverages containing amino acids. In addition, according to the present invention, there can also be provided: an improver for the flavor of food products and beverages; a method for improving the flavor of food products and beverages; and an aldehyde compound-generating composition.

### Embodiments of Carrying out the Invention

The present invention will be described in detail below. The constitutive elements of the present invention given below may be described based on some typical embodiments or specific examples. However, the present invention should not be limited to such embodiments. In the present description, the numerical range expressed with the wording "a number to another number" means the range that falls between the former number indicating the lower limit value of the range and the latter number indicating the upper limit value thereof.

### (Method for producing an aldehyde compound)

The present embodiment relates to a method for producing an aldehyde compound, including allowing multicopper oxidase to act on food products and beverages or materials for food products and beverages, containing amino acid or an analogue thereof.

Since the present embodiment has the above-described configuration, it can generate aldehyde compounds in food products and beverages containing amino acids. Aldehyde compounds derived from amino acids are known to emit aromas and to exhibit flavor-improving action and antibacterial action. Thus, according to the present embodiment, food products and beverages with improved aromas and flavors, and food products and beverages with enhanced antiseptic effects can be obtained. More specifically, food products and beverages, which have achieved the masking of off- flavors in food products, improvement of flavor, improvement of *umami,* salt-reducing effect, and antiseptic effect, can be obtained.

In the present embodiment, allowing multicopper oxidase to act on the products and the beverages or the materials therefor is preferably carried out in the presence of a mediator described below. That is, the present embodiment preferably relates to a method for producing an aldehyde compound, including allowing multicopper oxidase to act on food products and beverages or materials for food products and beverages, containing amino acid or an analogue thereof, in the presence of a mediator. By performing the step of allowing multicopper oxidase to act on food products and beverages containing amino acid or an analogue thereof in the presence of a mediator, the amount of an aldehyde compound generated can be increased, and the aldehyde compound can be produced more efficiently.

In the present embodiment, since multicopper oxidase is allowed to act on food products and beverages or materials for food products and beverages, containing an amino acid or an analogue thereof, an aldehyde compound can be generated in the food products and beverages in the form of final products. For example, although phenylacetaldehyde is said to be an instable compound, aldehyde compounds such as phenylacetaldehyde do not need to be isolated by allowing multicopper oxidase to act on food products and beverages or materials for food products and beverages, containing an amino acid or an analogue thereof. Thus, it becomes possible to allow the food products and the beverages to contain aldehyde compounds in higher concentrations, and thereby it becomes possible to provide food products and beverages containing higher concentrations of aldehyde compounds.

Furthermore, in the present embodiment, as such multicopper oxidase, a food product-derived compound or a highly safe compound can be used. In addition, there is a wide variety of food products and beverages, or materials for food products and beverages, containing amino acids or analogues thereof. For this reason, the aldehyde compounds generated in food products and beverages are highly safe, and as a result, highly safer food products and beverages can be produced. Further, the method for producing an aldehyde compound of the present embodiment does not rely on organic synthesis, but rather, the reaction can be carried out in an aqueous solvent, thereby reducing the burden on the environment.

### < Food products and beverages or materials for food products and beverages, containing amino acid or analogue thereof >

In the method for producing an aldehyde compound of the present embodiment, an amino acid or an analogue thereof is used as a reaction substrate (oxidizable substrate).

In the present embodiment, the food products and the beverages, or the materials for food products and beverages preferably contain, as an amino acid, at least one type selected from the group consisting of glycine (Gly), alanine (Ala), valine (Val), leucine (Leu), isoleucine (Ile), phenylalanine (Phe), tyrosine (Tyr), tryptophan (Trp), serine (Ser), threonine (Thr), cysteine (Cys), methionine (Met), aspartic acid (Asp), glutamic acid (Glu), asparagine (Asn), glutamine (Gln), lysine (Lys), arginine (Arg), histidine (His) and proline (Pro); more preferably contain at least one type selected from the group consisting of lysine (Lys), cysteine (Cys), methionine (Met), histidine (His), valine (Val), glycine (Gly), isoleucine (Ile), leucine (Leu), phenylalanine (Phe), proline (Pro) and tryptophan (Trp); and further preferably contain at least one type selected from the group consisting of methionine (Met), isoleucine (Ile), tryptophan (Trp) and phenylalanine (Phe).

It is to be noted that, in the present description, an analogue of an amino acid is a compound derived from an amino acid, in which a portion of the molecular structure of the amino acid has been altered. For example, an analogue of an amino acid may be an amino acid in which at least one hydrogen atom in the side chain thereof is replaced with a substituent. Examples of the substituent may include halogen atoms such as fluorine, chlorine, bromine, and iodine; ethynyl groups; cyano groups; azide groups; and alkyl groups.

In the present embodiment, food products and beverages or materials for food products and beverages preferably contain at least isoleucine. By allowing multicopper oxidase to act on isoleucine, tiglic aldehyde is generated, for example. Tiglic aldehyde is a compound also called trans-2-methyl-2-butenal, which is known to be present in *Rubus idaeus* such as raspberries, or in food products such as passion fruit, papaya, and onions. trans-2-Methyl-2-butenal is also known to be a component generated by cooking beef and other foods by heating. For this reason, trans-2-methyl-2-butenal is used for the purpose of reproducing aromas and enhancing flavors in a variety of processed foods, including baked goods, beverages, and dairy products.

In the present embodiment, food products and beverages or materials for food products and beverages preferably contain at least tryptophan. By allowing multicopper oxidase to act on tryptophan, 4-quinolinecarboxyaldehyde or indole is generated, for example. Since 4-quinolinecarboxyaldehyde is one of the components that exhibit antibacterial activity, and indole is one of the components that can be used as a flavorings, these components have high commercial values.

Moreover, in the present embodiment, food products and beverages or materials for food products and beverages preferably contain at least phenylalanine. Phenylalanine is preferably the naturally occurring compound L-phenylalanine (LPA), but may also be the artificially produced compound D-phenylalanine (DPA). By allowing multicopper oxidase to act on phenylalanine, phenylacetaldehyde or benzaldehyde is generated, for example. Since phenylacetaldehyde exhibits a sweet, rose-like, and fresh aroma, it is mainly used as a raw material for preparing flavors in fragrances and food products. In addition, since benzaldehyde exhibits a sweet and fruit-like aroma, it is preferably used in seasonings and various types of processed food products. Furthermore, benzaldehyde is also known to exhibit antibacterial activity against *Staphylococcus aureus* and other bacteria, also making it useful as an antibacterial ingredient.

The aforementioned amino acid or an analogue thereof may be one that is originally contained in food products and beverages or materials for food products and beverages. Alternatively, the amino acid or the analogue thereof may have been added, separately, into food products and beverages or materials for food products and beverages. By separately adding the amino acid or the analogue thereof into food products and beverages or materials for food products and beverages, the concentration of the amino acid or the analogue thereof contained in the food products and beverages or the materials for food products and beverages can be easily adjusted to a desired range, and thereby, an aldehyde compound can be generated more efficiently. In addition, although the amount of an aldehyde compound generated may vary depending on the type of the food product, the amount of an aldehyde compound generated can be controlled by separately adding the amino acid or the analogue thereof into food products and beverages or materials for food products and beverages. Furthermore, by separately adding the amino acid or the analogue thereof into food products and beverages or materials for food products and beverages, it becomes possible to increase the variety of aldehyde compounds to be generated.

The concentration of the amino acid or the analogue thereof contained in food products and beverages or materials for food products and beverages is preferably adjusted appropriately, depending on the type, concentration, etc. of the multicopper oxidase or the mediator to be allowed to act. For example, the initial concentration of the amino acid or the analogue thereof contained in food products and beverages or materials for food products and beverages is preferably 0.01 mM or more, more preferably 0.1 mM or more, even more preferably 1 mM or more, further preferably 5 mM or more, and particularly preferably 10 mM or more. The initial concentration of the amino acid or the analogue thereof contained in food products and beverages or materials for food products and beverages is preferably 1000 mM or less, more preferably 900 mM or less, even more preferably 800 mM or less, further preferably 700 mM or less, and particularly preferably 500 mM or less. Alternatively, the initial concentration of the amino acid or the analogue thereof contained in food products and beverages or materials for food products and beverages may also be 200 mM or less, 150 mM or less, 100 mM or less, 50 mM or less, 30 mM or less, or 20 mM or less. By setting the initial concentration of the amino acid or the analogue thereof to be within the above-described range, aldehyde compounds can be efficiently generated.

### < Multicopper oxidase >

The method for producing an aldehyde compound of the present embodiment includes a step of allowing multicopper oxidase to act on food products and beverages or materials for food products and beverages, containing an amino acid or an analogue thereof. Multicopper oxidase is an enzyme that contains 2 to 8 atoms of copper in the molecule thereof, which is necessary for enzyme activity, and is an enzyme that subjects oxygen to electron reduction so as to generate water molecules. Examples of such multicopper oxidase may include laccase, bilirubin oxidase, ascorbic acid oxidase, ceruloplasmin, Fet3p, CueO, CotA, stellacyanin, tyrosinase, catechol oxidase, and nitrite reductase.

Among others, it is preferable that the multicopper oxidase is at least one type selected from phenol oxidase and bilirubin oxidase. The multicopper oxidase is more preferably phenol oxidase, and the phenol oxidase is preferably polyphenol oxidase, and is more preferably laccase.

Laccase is an enzyme (EC 1.10.3.2) having phenol oxidase activity, and can be used in any given application that utilizes the oxidation reaction of a substrate and/or a variety of accompanying chemical reactions caused by radical species of reaction intermediates generated by the aforementioned oxidation reaction. Examples of such oxidation reaction or accompanying chemical reactions may include: the oxidation of phenolic compounds such as o-, p-diphenol, urushiol, and laccol; the oxidation of aromatic amines such as p-phenylenediamine; the decomposition of lignin; and the crosslinking of proteins having easily oxidized functional groups such as tyrosine side chains (phenolic hydroxyl groups), cysteine side chains (sulfhydryl groups), lysine side chains (ε-amino groups), and histidine side chains (imidazole groups). The chemical modification of a substrate by the oxidation reaction and accompanying chemical reactions of laccase in this manner can also be called "oxidative modification."

Laccase is present in plants, fungi, bacteria, animals, etc. Among others, the laccase used in the present invention is preferably derived from fungi or bacteria. Specific examples may include laccases derived from Aspergillus sp., Neurospora sp., Podospora sp., Botrytis sp., Collybia sp., Fomes sp., Lentinus sp., Pleurotus sp., Pycnoporus sp., Pyricularia sp., Trametes sp., Rhizoctonia sp., Rigidoporus sp., Coprinus sp., Psatyrella sp., Myceliophtera sp., Schtalidium sp., Polyporus sp., Phlebia sp., Coriolus sp., and Bacillus sp. Among other, laccase derived from Trametes sp. is particularly preferable. By using the laccase derived from Trametes sp., an aldehyde compound can be efficiently generated.

Laccase can be prepared from the culture medium of the aforementioned microorganisms serving as origins of laccase. A specific preparation method may be a method of recovering laccase from the culture medium or cell mass of the above-described microorganism. For example, when laccase-secreting microorganisms are used, after the cell mass has been recovered in advance from the culture medium by filtration, centrifugation, etc., as necessary, the enzyme is then separated and/or purified. On the other hand, when non-laccase-secreting microorganisms are used, after the cell mass has been recovered in advance from the culture medium, as necessary, the cell mass is disintegrated by a pressure treatment, an ultrasonic treatment, etc., so that the enzyme is exposed, and the enzyme is then separated and/or purified. The method of separating and/or purifying the enzyme is not particularly limited, and a known protein separation and/or purification method can be adopted. Examples of the protein separation and/or purification method may include a centrifugation method, a UF concentration method, a salting-out method, and various chromatographic methods using ion exchange resins, etc. The separated and/or purified enzyme can be pulverized by drying methods such as freeze-drying and vacuum drying, or can also be pulverized by using appropriate excipients and/or drying aids in the drying methods. In addition, the separated and/or purified enzymes can also be liquefied by adding appropriate additives and sterilizing by filtration.

As laccase, a commercially available product can also be used. An example of a preferred commercially available product may be laccase (LC) derived from Trametes sp., which is manufactured by Amano Enzyme, Inc.

Bilirubin oxidase is an enzyme (EC1.3.3.5) having bilirubin oxidase activity. Bilirubin oxidase derived from, for example, microorganisms belonging to Myrothecium sp., Coprinus sp., Penicillium sp., or Bacillus sp. can be used. Examples of the Myrothecium sp. may include preserved strains such as *Myrothecium verrucaria* MT-1, FERM-BP 653 (see Agricultural and Biological Chemistry, Vol. 45, pp. 2383-2384 (1981))*, Myrothecium verrucaria* IFO 6113, *Myrothecium verrucaria* IFO 6133, *Myrothecium verrucaria* IFO 6351, *Myrothecium verrucaria* IFO 9056, *Myrothecium tinctum* IFO 9950, and *Myrothecium verrucaria* IFO 9531. Examples of the Coprinus sp. may include preserved strains such as *Coprinus cinereus* IFO 8371 and *Coprinus lagopides* IFO 30120. An example of the Penicillium sp. may be *Penicillium jensinerum* (see JP Patent Publication No. 63-309187 A (1988)). An example of the Bacillus sp. may be *Bacillus licheniformis* (see JP Patent Publication No. 61-209587 A (1986). These strains are subjected to liquid culture or solid culture by conventional methods, and the culture medium is then subjected to extraction, salting out, dialysis, ion exchange, gel filtration, etc. to obtain purified preparations of the enzyme bilirubin oxidase. On the other hand, the enzyme bilirubin oxidases derived from *Schizophyllum commune* (see JP Patent Publication No. 59-135886 A (1984)), derived from Asteraceae plants (see JP Patent Publication No. 62-285782 A (1987)), and derived from alfalfa (see JP Patent Publication No. 6-319536 A (1994)), as well as recombinants (see JP Patent Publication No. 5-199882 A (1993)), are also known, and these bilirubin oxidases can also be used.

As bilirubin oxidase, a commercially available product can also be used. Examples of preferred commercially available products may include commercially available products manufactured by Amano Enzyme, Inc., Takara Bio, Inc., Asahi Kasei Corporation, Sigma-Aldrich Corporation, etc.

When multicopper oxidase is allowed to act on food products and beverages or materials for food products and beverages, containing an amino acid or an analogue thereof, in the step of producing an aldehyde compound, the amount of multicopper oxidase to be acted on is not particularly limited, and it is preferable to add multicopper oxidase, so that the enzyme activity becomes, for example, 1 U/mL or more relative to 10 mM of the amino acid or the analogue thereof. From the viewpoint of further increasing the amount of an aldehyde compound generated, the enzyme activity is more preferably 5 U/mL or more, even more preferably 10 U/mL or more, further preferably 12 U/mL or more, and particularly preferably 20 U/mL or more, relative to 10 mM of the amino acid or the analogue thereof. Moreover, the enzyme activity may also be 40 U/mL or more, 60 U/mL or more, 80 U/mL or more, 100 U/mL, or 110 U/mL or more. The upper limit value of the enzyme activity is not particularly limited, and for example, it is preferably 200000 U/mL or less, more preferably 100000 U/mL or less, even more preferably 50000 U/mL or less, further preferably 20000 or less, still further preferably 20000 or less, and particularly preferably 15000 U/mL or less, relative to 10 mM of the amino acid or the analogue thereof. Furthermore, the upper limit value of the enzyme activity may also be 2000 U/mL or less, 1500 U/mL or less, 1200 U/mL or less, 1000 U/mL or less, 800 U/mL or less, 600 U/mL or less, 400 U/mL or less, 300 U/mL or less, or 200 U/mL or less, relative to 10 mM of the amino acid or the analogue thereof. When laccase is used as such multicopper oxidase, the additive amount of laccase is preferably within the above-described range. It is to be noted that the additive amount is preferably adjusted, as appropriate, depending on the type of multicopper oxidase.

The enzyme activity of multicopper oxidase is measured by the following method. First, a 0.25 mol/L phenol test solution, a 0.009 mol/L 4-aminoantipyrine test solution, and a 1 mol/L acetic acid/sodium acetate buffer (pH 4.5) are mixed with one another at a ratio of 1 : 1 : 0.5 to prepare a substrate solution. This substrate solution (2.5 ml) is placed in a cuvette and is then preheated at 30°C, and thereafter, a 0.5 ml of enzyme solution is added and stirred, and is then incubated at 30°C. The absorbance at 505 nm is measured after 10 seconds and 40 seconds. When the absorbance increases by 0.1 per minute, the amount of enzyme contained in 1 mL of the reaction solution is defined as 1 unit (U).

### < Mediator >

In the method for producing an aldehyde compound of the present embodiment, allowing multicopper oxidase to act on food products and beverages or materials for food products and beverages, containing an amino acid or an analogue thereof, is preferably carried out in the presence of a mediator. Herein, the mediator is a compound containing a ring structure having at least one hydroxyl group. Besides, in the present description, the mediator may be a reducing substrate. In addition, the mediator is preferably a component or a compound that plays a role for promoting or mediating generation of an aldehyde compound from an amino acid or an analogue thereof. In the step of producing an aldehyde compound of the present embodiment, it is considered that multicopper oxidase is allowed to act on a mediator containing a hydroxyl group, the hydroxyl group possessed by the ring structure of the mediator is oxidized, and the oxidized compound acts on an amino acid or an analogue thereof to cause Strecker degradation, thereby generating an aldehyde compound.

The mediator may be one that contains one ring structure having at least one hydroxyl group in one molecule thereof, or may also be one that contains two or more of the ring structures.

The mediator is preferably a compound that contains a ring structure having at least one hydroxyl group and an alkoxy group, or a compound that contains a ring structure having two or more hydroxyl groups. For example, the mediator is preferably a compound having the following structure:

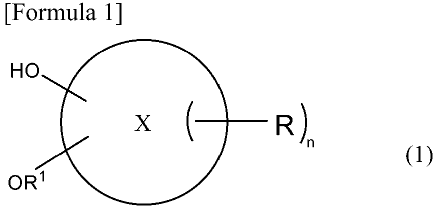

In the formula (1), X represents a ring structure, R represents a substituent, n represents a natural number including 0, with the upper limit being a substitutable number, and R¹ represents a hydrogen atom or an alkyl group.

The ring structure represented by X is preferably a heterocyclic ring or a cyclic hydrocarbon. The ring structure represented by X is preferably a 3-membered ring to a 10-membered ring, more preferably a 4-membered ring to a 8-membered ring, and further preferably a 5-membered ring or a 6-membered ring. When the ring structure represented by X is a heterocyclic ring, examples of the heteroatom constituting the heterocyclic ring may include an oxygen atom, a nitrogen atom, and a sulfur atom. Of these, the heteroatom is preferably an oxygen atom. When the ring structure represented by X is a cyclic hydrocarbon, examples of the cyclic hydrocarbon may include cycloalkane, cycloalkene, and aromatic hydrocarbon. In this case, examples of the ring structure represented by X may include cyclobutane, cyclopentane, cyclohexane, cyclopentene, cyclohexene, a benzene ring, a naphthalene ring, and an anthracene ring.

The alkyl group represented by R¹ is preferably an alkyl group containing 1 to 5 carbon atoms, more preferably an alkyl group containing 1 to 3 carbon atoms, further preferably an alkyl group having 1 or 2 carbon atoms, and particularly preferably a methyl group. In particular, R¹ is preferably a hydrogen atom or a methyl group.

Examples of the substituent represented by R may include substituents such as aliphatic hydrocarbon groups (e.g., an alkyl group, an alkenyl group, an alkynyl group, and a cycloalkyl group), aromatic hydrocarbon groups (e.g., a phenyl group, a naphthyl group, an anthryl group, a phenanthryl group, and a biphenyl group), a heterocyclic group, an acyl group, an alkoxy group, an amino group, a hydroxy group, a mercapto group, and a halogen atoms (e.g., a fluorine atom, a chlorine atom, a bromine atom, and an iodine atom). Otherwise, two Rs may together form an oxo group. The substituent may be substituted with another substituent, and examples of such other substituent may include the same as those described above. The substituent represented by R may be, for example, a hydrocarbon group, a halogen atom, or a monovalent group formed by combining a hydrocarbon group with one or more -O- or -C(=O)-. A monosaccharide structure may be linked to the substituent represented by R, and when the mediator contains two or more of the above-described ring structures in one molecule thereof, the above ring structure may be linked to the above substituent represented by R. In addition, when n is 2 or greater, the substituents represented by R may be linked to each other to form a ring.

Among others, the mediator is preferably a compound having any of the following structures:

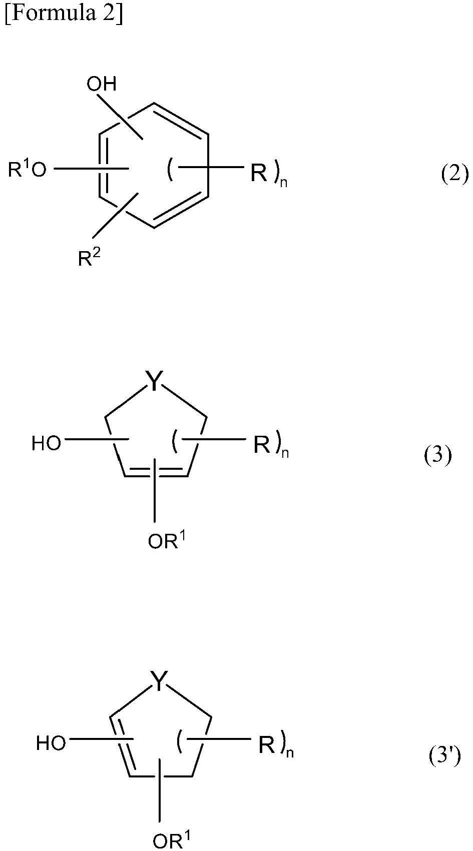

In the formula (2), R represents a substituent, n represents an integer from 0 to 3, R¹ represents a hydrogen atom or an alkyl group, and R² represents a hydrogen atom or a hydroxyl group. In addition, in the formulae (3) and (3'), R represents a substituent, n represents an integer from 0 to 2, R¹ represents a hydrogen atom or an alkyl group, and Y represents an oxygen atom, a nitrogen atom, or a sulfur atom. In the formulae (3) and (3'), Y is particularly preferably an oxygen atom, and the ring structure possessed by the mediator is particularly preferably a benzene ring or a dihydrofuran ring. Among others, when the ring structure possessed by the mediator is a dihydrofuran ring, it is preferable that the mediator has the structure represented by formula (3). In addition, when the ring structure possessed by the mediator is a dihydrofuran ring, it is preferable that the mediator has a hydroxyl group or an alkoxy group at positions 3 and 4 thereof.

In particular, the mediator is preferably a compound having any of the following structures:

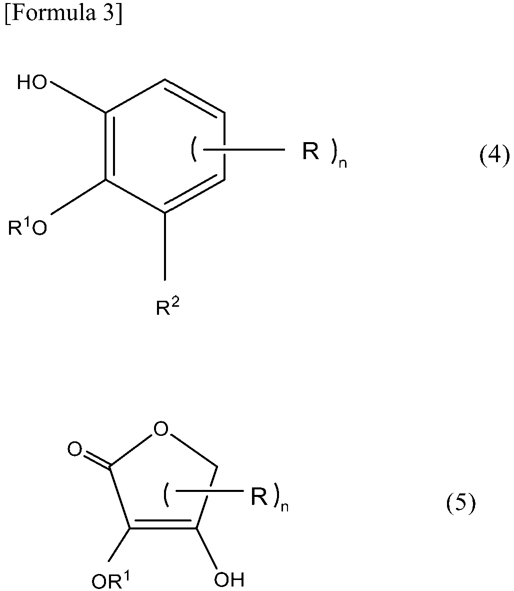

In the formula (4), R represents a substituent, n represents an integer from 0 to 3, R¹ represents a hydrogen atom or an alkyl group, and R² represents a hydrogen atom or a hydroxyl group. In the formula (4), n is more preferably an integer from 0 to 2, and particularly preferably an integer of 0 or 1. In addition, in the formula (5), R represents a substituent, n represents an integer of 0 or 1, and R¹ represents a hydrogen atom or an alkyl group. In the formula (5), n is particularly preferably 1.

Specific examples and preferred ranges of R¹ and R in the formulae (2) to (5) are the same as those of R¹ and R in the formula (1).

Specific examples of the mediator may include, for example, DL-catechin, tannic acid, rutin, chlorogenic acid, caffeic acid, caffeine, curcumin, hesperidin, L-DOPA, pyrogallol, vanillin, eugenol, gallic acid monohydrate, ferulic acid, isoeugenol, α-glucosylrutin, lecithin, sugar beet pectin, resveratrol, anthocyanin, anthocyanidin, procyanidin, phloridzin, quercetin, vanillic acid, and apple polyphenol. Among them, the mediator is preferably at least one type selected from the group consisting of DL-catechin, tannic acid, chlorogenic acid, caffeic acid, curcumin, hesperidin, L-DOPA, pyrogallol, vanillin, eugenol, gallic acid monohydrate, ferulic acid, isoeugenol, α-glucosylrutin, and rutin.

Among others, it is preferable that the mediator is a polyphenol. In the present description, polyphenols are compounds having a structure in which multiple hydroxyl groups bind to a benzene ring or a naphthalene ring. Examples of such polyphenols may include DL-catechin, tannic acid, chlorogenic acid, caffeic acid, L-DOPA, pyrogallol, gallic acid monohydrate, α-glucosylrutin, rutin, procyanidin, quercetin glycoside, verbascoside, isoverbascoside, diosmetin, diglucuronide, apigenin 7-diglucuronide, and luteolin 7-diglucuronide. Among these polyphenols, the mediator is preferably at least one type selected from the group consisting of α-glucosylrutin, L-DOPA, DL-catechin, gallic acid monohydrate, chlorogenic acid, caffeic acid, tannic acid, and rutin, and the mediator is more preferably at least one type selected from the group consisting of DL-catechin, gallic acid monohydrate, chlorogenic acid, caffeic acid, tannic acid, and rutin. By using the above-described compound as a mediator, the amount of an aldehyde compound generated can be increased more effectively.

Moreover, the mediator may also be a compound contained in a plant extract, and the mediator may be a compound contained, for example, in pectin, a green coffee bean extract, a tea extract, an apple extract, a lemon verbena extract, etc. The mediator is preferably a compound contained in at least one type selected from the group consisting of a green coffee bean extract, a tea extract, and an apple extract, and is more preferably a compound contained in at least one type selected from the group consisting of a tea extract and an apple extract. For example, pectin contains ferulic acid; a green coffee bean extract and a tea extract contain DL-catechin, chlorogenic acid, and caffeic acid; an apple extract contains apple polyphenols such as procyanidins (a structure in which 2 to 15 catechins are bonded), catechins, chlorogenic acid, phlorizin, and quercetin glycoside; and a lemon verbena extract contains polyphenols such as verbascoside, isoverbascoside, diosmetin, diglucuronide, apigenin 7-diglucuronide, and luteolin 7-diglucuronide. These components and extracts may contain analogues of the above-mentioned compounds. Examples of the analogues may include compounds, which have the basic skeleton of the above-mentioned compounds, but in which at least one hydrogen atom in the side chain, etc. is substituted with a substituent. For example, examples of the analogue of chlorogenic acid may include 4,5-dicaffeoylquinic acid, 4-caffeoylquinic acid, 4-feruloylquinic acid, 3,5-dicaffeoylquinic acid, 3-caffeoylquinic acid, 3-feruloylquinic acid, 3,4-dicaffeoylquinic acid, 5-caffeoylquinic acid, and 5-feruloylquinic acid. Examples of the analogue of catechin may include epicatechin, epigallocatechin, and epigallocatechin gallate. Examples of the analogue of procyanidins may include procyanidin B1, procyanidin B2, and procyanidin A2. Also, pectin and the above-mentioned extracts may contain a plurality of the above-mentioned compounds or analogues.

In the present embodiment, an apple extract is preferably used as a mediator, and apple polyphenol is particularly preferably used. By using apple polyphenol as a mediator, it also becomes possible to reduce the additive amount of multicopper oxidase that is used in combination.

As an extract described above, a commercially available product can also be used, and for example, Sunfood 100 manufactured by Mitsubishi Chemical Corporation, Tea Extract (a raw material for food products) manufactured by Sankt Co., Ltd., Apple Polyphenol Powder manufactured by Frontier Foods, INC., Green Coffee Bean Extract P manufactured by Oryza Oil & Fat Chemical Co., Ltd., etc. can be used.

When a mediator is allowed to act on an amino acid or an analog thereof, the amount of the mediator to be allowed to act thereon is not particularly limited. However, the concentration of the mediator in the reaction solution is preferably 0.01 mM or more, more preferably 0.05 mM or more, further preferably 0.1 mM or more, and particularly preferably 0.5 mM or more. The concentration of the mediator in the reaction solution is preferably 500 mM or less, more preferably 300 mM or less, and further preferably 100 mM or less. Alternatively, the concentration of the mediator in the reaction solution may also be 50 mM or less, 25 mM or less, 10 mM or less, or 5 mM or less. The amount of the mediator added is preferably adjusted appropriately, depending on the type of the mediator.

Moreover, the concentration of the mediator in the reaction solution is preferably 0.001% by mass or more, more preferably 0.005% by mass or more, further preferably 0.01% by mass or more, and particularly preferably 0.05% by mass or more. The concentration of the mediator in the reaction solution is preferably 50% by mass or less, more preferably 30% by mass or less, and further preferably 10% by mass or less. Alternatively, the concentration of the mediator in the reaction solution may be 5% by mass or less, 2.5% by mass or less, 1% by mass or less, or 0.5% by mass or less. It is to be noted that the additive amount is preferably adjusted appropriately, depending on the type of the mediator.

### < Optional components >

In the step of producing an aldehyde compound, in addition to the above-mentioned components, optional components may be present, as appropriate. For example, a pH adjuster (hydrochloric acid, sodium hydroxide, citric acid, acetic acid, etc.) may be added as an optional component.

### < Production conditions >

The reaction time, the temperature, the pH of the reaction solution, and the like, which are applied when multicopper oxidase is allowed to act on an amino acid or an analogue thereof, are not particularly limited. The reaction temperature is, for example, preferably 10°C or higher, more preferably 15°C or higher, further preferably 20°C or higher, and particularly preferably 25°C or higher. The reaction temperature is preferably 80°C or lower, more preferably 70°C or lower, and further preferably 60°C or lower. In addition, the reaction temperature may be 50°C or lower, or may be 40°C or lower. The pH of the reaction solution is, for example, preferably pH 4 or more, and more preferably pH 5 or more. In addition, the pH of the reaction solution is preferably pH 10 or less, more preferably pH 9 or less, and further preferably pH 8 or less. The reaction time is, for example, preferably 1 minute or more, more preferably 10 minutes or more, and further preferably 30 minutes or more. The reaction time is preferably 240 hours or less, more preferably 96 hours or less, further preferably 48 hours or less, and particularly preferably 24 hours or less. Moreover, the reaction time may be 12 hours or less, 6 hours or less, or 3 hours or less. Besides, even in a case where a mediator is present when the multicopper oxidase is allowed to act on the amino acid or the analogue thereof, the above-described reaction conditions are preferably adopted. By adopting the above-described reaction conditions, the aldehyde compound can be produced with good efficiency. Besides, the optimal reaction conditions may be determined through preliminary experiments, etc.

In the step of allowing the multicopper oxidase to act on the amino acid or the analogue thereof, a shaking treatment or a stirring treatment may be carried out during at least a portion of the above-described reaction time. In the shaking treatment or the stirring treatment, it is preferable to carry out shaking or stirring under conditions in which individual components are sufficiently mixed with one another.

When both the multicopper oxidase and the mediator are allowed to act on the amino acid or the analogue thereof, it is preferable to add the multicopper oxidase and the mediator to a solution containing the amino acid or the analogue thereof. At this time, the order of addition is not particularly limited. The multicopper oxidase may be added to a solution containing the amino acid or the analogue thereof, and then the mediator may be added thereto, or the mediator may be added to a solution containing the amino acid or the analogue thereof, and then the multicopper oxidase may be added thereto. Otherwise, the multicopper oxidase and the mediator may be simultaneously added to a solution containing the amino acid or the analogue thereof.

As a solvent used when the multicopper oxidase and the mediator are allowed to act on the amino acid or the analogue thereof, water, an organic solvent, or a mixed solvent of these is preferably used. Examples of the organic solvent may include: alcohols (aliphatic saturated alcohols, aliphatic unsaturated alcohols, alicyclic alcohols, aromatic alcohols, heterocyclic alcohols, etc., such as methyl alcohol, ethyl alcohol, propyl alcohol, isopropyl alcohol, butyl alcohol, isobutyl alcohol, amyl alcohol, hexyl alcohol, heptyl alcohol, octyl alcohol, capryl alcohol, allyl alcohol, cyclopentanol, and benzyl alcohol); ethers (methyl ether, ethyl ether, propyl ether, methyl ethyl ether, methyl propyl ether, methyl butyl ether, vinyl ether, etc.); esters (esters of carboxylic acids such as formic acid, acetic acid, propionic acid, butyric acid, valeric acid and phthalic acid, with alcohols such as methyl, ethyl, propyl, isopropyl, butyl, isobutyl, n-amyl and isoamyl); and ketones (aliphatic saturated ketones, aliphatic unsaturated ketones, alicyclic ketones, aromatic ketones, etc., such as acetone, ethyl methyl ketone, methyl propyl ketone, methyl vinyl ketone, cyclobutanone, and acetophenone). However, from the viewpoint of reducing burden on the environment, the reaction solvent is preferably an aqueous solvent.

After the step of allowing the multicopper oxidase to act on the amino acid or the analogue thereof, the method for producing an aldehyde compound may include a step of inactivating the multicopper oxidase. In the step of inactivating the multicopper oxidase, for example, the reaction solution containing the multicopper oxidase can be heated to 80°C or higher, or the enzyme solution can be isolated by centrifugation or the like.

The amount of the aldehyde compound generated can be analyzed, for example, using GC-MS. In addition, the degree of generation of the aldehyde compound can also be evaluated by sensory evaluation of the presence or absence of fragrance of a product.

### (Aldehyde compound)

The present embodiment may relate to an aldehyde compound produced by the aforementioned production method. Since the aldehyde compound obtained by the aforementioned production method is safe, it may be added to pharmaceutical products, etc., as well as food products and beverages. Moreover, the present embodiment may relate to a food product and a beverage, a pharmaceutical product, a perfume, and an antiseptic, which contain the aldehyde compound obtained by the aforementioned production method.

Besides, the aldehyde compound produced by the aforementioned production method may be isolated, for example, by dissolving it in an organic solvent, etc., which dissolves an aldehyde compound, separating the organic solvent layer, and then distilling away the solvent.

### (Improver for flavor of food products and beverages)

The present embodiment may relate to an improver for the flavor of food products and beverages, containing a mediator and multicopper oxidase. Herein, the mediator is a compound containing a ring structure having at least one hydroxyl group. By allowing food products and beverages or to materials for food products and beverages to contain the aldehyde compound obtained by the aforementioned production method, off-flavors are masked, a rich taste or a scent is added to the food products and beverages, so that the flavor thereof can be improved.

The improver for the flavor of food products and beverages may be in any form, such as powders, a solid, a gel, or a liquid. By adding the improver for the flavor of food products and beverages to food products and beverages or materials for food products and beverages, containing an amino acid or an analogue thereof, aldehyde compound can be generated in the food products and beverages or the materials for food products and beverages. It is to be noted that there is a case where food products and beverages or materials for food products and beverages originally contain the above-described mediator, and thus that the mediator is added, as necessary.

Examples of the mediator contained in the improver for the flavor of food products and beverages may include the aforementioned mediators. Among others, the mediator is preferably a compound contained in at least one type selected from the group consisting of a green coffee bean extract, a tea extract, a lemon verbena extract and an apple extract, is more preferably a compound contained in at least one type selected from the group consisting of a green coffee bean extract, a tea extract and an apple extract, and is further preferably a compound contained in at least one type selected from the group consisting of a tea extract and an apple extract.

Examples of the multicopper oxidase contained in the improver for the flavor of food products and beverages may include the aforementioned multicopper oxidases. Among others, the multicopper oxidase is preferably laccase, and is more preferably laccase derived from Trametes sp.

### (Method for improving the flavor of food products and beverages)

The present invention may relate to a method for improving the flavor of food products and beverages, including a step of allowing a mediator and multicopper oxidase to act on food products and beverages or materials for food products and beverages, containing an amino acid or an analogue thereof. Herein, the mediator is a compound containing a ring structure having at least one hydroxyl group. Besides, the amino acid or the analogue thereof may be originally contained in the food products and beverages or the materials for food products and beverages, and the amino acid or the analogue thereof may be further added to the food products and beverages or the materials for food products and beverages. Also, a predetermined type of amino acid may be added to the food products and beverages or the materials for food products and beverages. By allowing the mediator and multicopper oxidase to act on the food products and beverages or the materials for food products and beverages, containing an amino acid or an analogue thereof, an aldehyde compound is generated, and the generated aldehyde compound masks the off-flavor of the food products and beverages or imparts richness and aroma to the food products and beverages, so that the flavor of the food products and beverages can be improved.

In the present embodiment, the food products and beverages or the materials for food products and beverages preferably contains at least one type selected from the group consisting of methionine, isoleucine, tryptophan and phenylalanine, and more preferably contains at least one type selected from the group consisting of isoleucine and tryptophan.

Examples of the food products and beverages may include: beverages such as dairy products, coffee drinks, black tea drinks, green tea drinks, beer, plant-based drinks (soy milk, almond milk, oat milk, rice milk, coconut milk, pea milk, and potato milk), wine and cocoa; and plant-based meat substitutes. Moreover, the materials for food products and beverages are the raw materials (materials) used to produce food products and beverages. Examples of the materials for food products and beverages may include: cereal crops, such as barley, rice, wheat, rye, oats, buckwheat, sorghum, barnyard millet, millet, teff, quinoa, and corn; pulses, such as soybeans, lentils, broad beans, peas, chickpeas, mung beans, lupin beans, and kidney beans; nuts and seeds, such as hemp (industrial hemp), canary seeds, linseeds, almonds, cashew nuts, hazelnuts, pecan nuts, macadamia nuts, pistachios, walnuts, Brazil nuts, peanuts, coconuts, pili nuts, chestnuts, sesame seeds, and pine nuts; and tubers, such as potatoes, sweet potatoes, and taro. Among these, the food products and beverages or the materials for food products and beverages used herein may preferably be at least one type selected from the group consisting of soy milk, oat milk, almond milk, wine, pea milk, potato milk, coconut milk, coffee drinks, and green tea drinks.

Examples of the mediator used in the method for improving the flavor of food products and beverages may include the aforementioned mediators. Among others, the mediator is preferably a compound contained in at least one type selected from the group consisting of a green coffee bean extract, a tea extract, a lemon verbena extract and an apple extract, is more preferably a compound contained in at least one type selected from the group consisting of a green coffee bean extract, a tea extract and an apple extract, and is further preferably a compound contained in at least one type selected from the group consisting of a tea extract and an apple extract.

Examples of the multicopper oxidase used in the method for improving the flavor of food products and beverages may include the aforementioned multicopper oxidases. Among others, the multicopper oxidase is preferably laccase, and is more preferably laccase derived from Trametes sp.

### (Aldehyde compound-generating composition)

The present embodiment relates to an aldehyde compound-generating composition, containing multicopper oxidase and an amino acid or a derivative thereof. In addition, the present embodiment may relate to an aldehyde compound-generating composition, containing a mediator, multicopper oxidase, and an amino acid or an analogue thereof. Since a specific amino acid can be blended in an aldehyde compound-generating composition formed by mixing a mediator, multicopper oxidase, and an amino acid or an analogue thereof, a product can be more easily controlled. For example, when such aldehyde compound-generating composition formed by mixing a mediator, multicopper oxidase, and an amino acid or an analogue thereof is added to food products and beverages or other materials, a product that exhibits a predetermined function (for example, aroma and *umami,* and antibacterial action) can be generated in a desired amount, and Production management and quality maintenance become easier.

Examples of the mediator contained in the aldehyde compound-generating composition of the present embodiment may include the aforementioned mediators. Among others, the mediator is preferably a compound contained in at least one type selected from the group consisting of a lemon verbena extract, a green coffee bean extract, a tea extract and an apple extract, is more preferably a compound contained in at least one type selected from the group consisting of a green coffee bean extract, a tea extract and an apple extract, and is further preferably a compound contained in at least one type selected from the group consisting of a tea extract and an apple extract. Besides, when the food products and beverages or other materials originally contain the above-described mediator, the composition may not necessarily contain the mediator.

Examples of the multicopper oxidase contained in the aldehyde compound-generating composition of the present embodiment may include the aforementioned multicopper oxidases. Among others, the multicopper oxidase is preferably laccase, and is more preferably laccase derived from Trametes sp.

Examples of the amino acid or the analogue thereof contained in the aldehyde compound-generating composition of the present embodiment may include the aforementioned amino acids or the analogues thereof. Among others, the amino acid or the analogue thereof preferably includes at least one type selected from the group consisting of methionine, isoleucine, tryptophan and phenylalanine, and more preferably includes at least one type selected from the group consisting of isoleucine and tryptophan.

### Examples

Hereinafter, the characteristics of the present invention will be more specifically described in the following examples and comparative examples. The materials, amounts used, proportions, treatment contents, treatment procedures, etc. shown in the following examples may be changed, as appropriate, without deviating from the gist of the present invention. Therefore, the scope of the present invention should not be interpreted limitedly by the specific examples shown below.

### (Method of measuring enzyme activity)

A 0.25 mol/L phenol test solution, a 0.009 mol/L 4-aminoantipyrine test solution, and a 1 mol/L acetic acid/sodium acetate buffer (pH 4.5) were mixed at a ratio of 1 : 1 :0.5 to prepare a substrate solution. This substrate solution (2.5 ml) was placed in a cuvette and was then preheated at 30°C. Thereafter, 0.5 ml of an enzyme solution was added to the substrate solution, and the mixed solution was stirred and was then incubated at 30°C. The absorbance at 505 nm was measured after 10 and 40 seconds. When the absorbance was increased by 0.1 for 1 minute under these conditions, the amount of the enzyme contained in 1 mL of the reaction solution was defined as 1 unit (U).

### (Materials Used)

The compounds listed in the following table were used as mediators (reduction substrates), substrates, and enzymes, respectively.

**[Table 1]**

| Type | Substance Name | Manufacturer |
|---|---|---|
| Mediator | Apple polyphenol* | Frontier Foods, INC. |
| Mediator | DL-Catechin | Tokyo Chemical Industry Co., Ltd. |
| Mediator | Rutin | FUJIFILM Wako Pure Chemical Corp. |
| Mediator | Caffeic acid | Tokyo Chemical Industry Co., Ltd. |
| Mediator | Curcumin | FUJIFILM Wako Pure Chemical Corp. |
| Mediator | Vanillin | FUJIFILM Wako Pure Chemical Corp. |
| Mediator | Eugenol | Tokyo Chemical Industry Co., Ltd. |
| Mediator | Ferulic acid | Sigma-Aldrich |
| Mediator | Isoeugenol | FUJIFILM Wako Pure Chemical Corp. |
| Mediator | Butylhydroxyanisole | Sigma-Aldrich |
| Mediator | L-Ascorbic acid | FUJIFILM Wako Pure Chemical Corp. |
| Mediator | Sodium erythorbate monohydrate | FUJIFILM Wako Pure Chemical Corp. |
| Mediator | L-Cysteine hydrochloride monohydrate | FUJIFILM Wako Pure Chemical Corp. |
| Mediator | Hesperidin | FUJIFILM Wako Pure Chemical Corp. |
| Mediator | Tannic acid | FUJIFILM Wako Pure Chemical Corp. |
| Mediator | Chlorogenic acid | Tokyo Chemical Industry Co., Ltd. |
| Mediator | L-DOPA | Sigma-Aldrich |
| Mediator | Pyrogallol | FUJIFILM Wako Pure Chemical Corp. |
| Mediator | Gallic acid monohydrate | FUJIFILM Wako Pure Chemical Corp. |
| Mediator | GENU pectin type BETA BI-J (pectin)* | Sansho Co., Ltd. |
| Mediator | Lemon Verbena extract* | Vital Solutions GmbH |
| Mediator | Green coffee bean extract P* | Oryza Oil & Fat Chemicals Co., Ltd. |
| Mediator | Tea extract (EGCG 70%)* | Sanct Co., Ltd. |
| Substrate | L-Lysine | FUJIFILM Wako Pure Chemical Corp. |
| Substrate | L-Cysteine | Sigma-Aldrich |
| Substrate | DL-Methionine | FUJIFILM Wako Pure Chemical Corp. |
| Substrate | L-Methionine | FUJIFILM Wako Pure Chemical Corp. |
| Substrate | L-Histidine | FUJIFILM Wako Pure Chemical Corp. |
| Substrate | L-Valine | FUJIFILM Wako Pure Chemical Corp. |
| Substrate | Glycine | FUJIFILM Wako Pure Chemical Corp. |
| Substrate | L-Isoleucine | Tokyo Chemical Industry Co., Ltd. |
| Substrate | L-Leucine | FUJIFILM Wako Pure Chemical Corp. |
| Substrate | L-Phenylalanine | FUJIFILM Wako Pure Chemical Corp. |
| Substrate | L-Proline | FUJIFILM Wako Pure Chemical Corp. |
| Substrate | L-Tryptophan | FUJIFILM Wako Pure Chemical Corp. |
| Enzyme | Laccase derived from *Trametes* sp. | Amano Enzyme Inc. |

| | | |
|---|---|---|
| (Substances * as mediators were added in mass %. Other mediators were added in number of moles.) | | |

### (Test Example 1)

To a 15-ml centrifuge tube, 1 ml of 250 mM phosphate buffer (pH 6.0), 2.5 ml of 20 mM each amino acid from 11 types of amino acids, 0.5 ml of 1 mass% apple polyphenol solution, and 1 ml of 0.5 mass% laccase solution were added, and thereafter, the reaction was carried out by shaking at 50°C for 1 hour. After completion of the reaction, the enzyme was inactivated by a boiling treatment for 10 minutes.

**[Table 2]**

| Reaction composition | Additive amount (ml) | Final concentration |
|---|---|---|
| 250 mM Phosphate buffer (pH 6.0) | 1 | 50 mM |
| 1 mass% Apple polyphenol solution | 0.5 | 0.1 mass% |
| 20 mM Amino acid solution | 2.5 | 10 mM |
| 0.5 mass% Laccase solution | 1 | 0.1 mass% (120 U/mL) |

After 0.8 g of NaCl had been dissolved in 4 ml of the reaction solution, solid-phase extraction was carried out using SPME Arrow, and a product was then analyzed by GC-MS. The analysis conditions were as follows.

### SPME Arrow (solid-phase extraction) common

Fiber used: DVB/PDMS/CAR, 1 cm
Extraction conditions: 50°C, 30 minutes of incubation → 50°C, 30 minutes of adsorption → 240°C, 1 minute of desorption
Bake conditions: 250°C, 30 minutes

### GC-MS QP-2020NX (Condition 1: Analysis of indole and 4-quinolinecarboxyaldehyde)

Column: InertCap pure-WAX (30 m, 0.25 mm, 0.25 µm)
GC conditions: Temperature increase: 40°C, 4 min, 10°C/min to 170°C, 5°C/min to 240°C, 240°C 10 min injection port: 250°C
MS conditions: Measurement mode: SCAN

### GC-MS OP-2020NX (Condition 2: Analysis of products other than those of Condition 1)

Column: InertCap pure-WAX (30 m, 0.25 mm, 0.25 µm)
GC conditions: Temperature increase: 40°C, 4 min, 10°C/min to 170°C, 20°C/min to 240°C, 240°C 10 min injection port: 250°C
MS conditions: Measurement mode: SCAN

### < Sensory Evaluation >

The products contained in the reaction solution were evaluated in terms of odor.
⊚: Strong odor felt
∘: Odor felt
△: Slight odor felt
-: No odor felt

**[Table 3]**

| Amino acid | Sensory evaluation | Intensity of odor |
|---|---|---|
| L-Lysine | Odor of popcorn | ○ |
| L-Cysteine | Slight sulfur smell | Δ |
| DL-Methionine | Strong consommé smell | ⊚ |
| L-Histidine | Slight caramel smell | Δ |
| L-Valine | Slight caramel smell | Δ |
| Glycine | Slightly pungent odor | ○ |
| L-Isoleucine | Slightly sour smell | ○ |
| L-Leucine | Slightly sour smell | ○ |
| L-Phenylalanine | Flower-like smell | ⊚ |
| L-Proline | Slightly pungent odor | Δ |
| L-Tryptophan | Grain odor | ○ |

Particularly strong odor was felt, when, in particular, DL-methionine and L-phenylalanine was reacted as substrates.

### < Analysis by GC-MS >

The products were identified using the following standard products.

**[Table 4]**

| Type | Substance name | Manufacturer |
|---|---|---|
| Product | Phenylacetaldehyde (PAA) | Combi-Blocks |
| Product | Benzaldehyde (BA) | Sigma-Aldrich |
| Product | Methional (MTN) | Sigma-Aldrich |
| Product | Tiglic aldehyde | Sigma-Aldrich |
| Product | Indole | FUJIFILM Wako Pure Chemical Corp. |
| Product | 4-Quinolinecarboxyaldehyde | Tokyo Chemical Industry Co., Ltd. |

**[Table 5]**

| Amino acid | Main product appeared |
|---|---|
| DL-Methionine | Methional |
| L-Isoleucine | Tiglic aldehyde |
| L-Phenylalanine | Belzaldehyde |
| | Phenylacetaldehyde |
| L-Tryptophan | Indole |
| | 4-Quinolinecarboxyaldehyde |

As a result of the analysis by GC-MS, it was confirmed that products were generated from DL-methionine, L-phenylalanine, L-isoleucine, and L-tryptophan.

### (Test Example 2)

The amino acids (DL-methionine, L-phenylalanine, L-isoleucine, and L-tryptophan), in which generation of products had been confirmed, were examined in terms of the amount of each product.

To a 15-ml centrifuge tube, 1 ml of 250 mM phosphate buffer (pH 6.0), 2.5 ml of 20 mM each amino acid from 4 types of amino acids, 1 ml of 1 mass% apple polyphenol solution, and 1 ml of 0.5 mass% laccase solution were added, and thereafter, the reaction was carried out by shaking at 50°C for 1 hour. After completion of the reaction, the enzyme was inactivated by a boiling treatment for 10 minutes.

**[Table 6]**

| Reaction composition | Additive amount (ml) | Final concentration |
|---|---|---|
| 250 mM Phosphate buffer (pH 6.0) | 1 | 50 mM |
| 1 mass% Apple polyphenol solution | 0.5 | 0 mass% or 0.1 mass% |
| 20 mM Each amino acid solution* | 2.5 | 10 mM |
| 0.5 mass% laccase solution | 1 | 0 mass% or 0.1 mass% (120 U/mL) |

| | | |
|---|---|---|
| *DL-methionine, L-phenylalanine, L-isoleucine, and L-tryptophan | | |

After 0.8 g of NaCl had been dissolved in 4 ml of the reaction solution, solid-phase extraction was carried out using SPME Arrow, and an analysis was then made by GC-MS.

**[Table 7]**

| Amino acid | Enzyme | Apple polyphenol | Methional (ppm) |
|---|---|---|---|
| | - | - | Undetected |
| DL-Methionine | + | - | Undetected |
| | - | + | Undetected |
| | + | + | 42.37 |

| | | | |
|---|---|---|---|
| (+ indicates "added", and - indicates "not-added" (*water was added instead)) | | | |

**[Table 8]**

| Amino acid | Enzyme | Apple polyphenol | Benzaldehyde (ppm) | Phenylacetaldehyde (ppm) |
|---|---|---|---|---|
| | - | - | 0.01 | Undetected |
| L-Phenylalanine | + | - | 0.02 | Undetected |
| | - | + | 0.03 | 1.12 |
| | + | + | 2.22 | 9.24 |

**[Table 9]**

| Amino acid | Enzyme | Apple polyphenol | Tiglic aldehyde (ppm) |
|---|---|---|---|
| | - | - | Undetected |
| L-Isoleucine | + | - | Undetected |
| | - | + | Undetected |
| | + | + | 0.24 |

**[Table 10]**

| Amino acid | Enzyme | Apple polyphenol | 4-Quinolinecarboxyaldehyde (ppm) | Indole (ppm) |
|---|---|---|---|---|
| | - | - | Undetected | Undetected |
| L-Tryptophan | + | - | 0.41 | Undetected |
| | - | + | Undetected | Undetected |
| | + | + | 0.66 | 0.13 |

When DL-methionine was used as a substrate, MTN (methional) was generated only by the use of apple polyphenol + enzyme.

When L-phenylalanine was used as a substrate, the amount of benzaldehyde (BA) was increased about 70 times and the amount of phenylacetaldehyde (PAA) generated was increased by 8 times, by the use of apple polyphenol + enzyme, compared with the use of apple polyphenol alone. It is assumed that benzaldehyde was generated as a by-product after phenylacetaldehyde had been generated.

When L-isoleucine was used as a substrate, it was confirmed that tiglic aldehyde was generated only by the use of apple polyphenol + enzyme.

When L-tryptophan was used as a substrate, it was confirmed that 4-quinolinecarboxyaldehyde was generated by the use of enzyme alone, and that indole was generated together with 4-quinolinecarboxyaldehyde and were generated by the use of apple polyphenol and enzyme. 4-Quinolinecarboxaldehyde is one of the components that exhibit antibacterial activity, and indole is used in a small amount in perfumes.

### (Test Example 3)

The amount of the mediator and the amount of the enzyme was examined when methionine was used as a substrate.

To a 15-ml centrifuge tube, 1 ml of 250 mM phosphate buffer (pH 6.0), 2.5 ml of 2 mL or 20 mM DL-methionine or L-methionine, 0.5 ml of 0.1 mass% or 1 mass% apple polyphenol or green coffee bean extract, and 1 ml of 0.05 mass% or 0.5 mass% laccase solution were added, and thereafter, the reaction was carried out by shaking at 50°C for 1 hour. After completion of the reaction, the enzyme was inactivated by a boiling treatment for 10 minutes. It is to be noted that the green coffee bean extract or the apple polyphenol was added to a final concentration of 0.01 mass% or 0.1 mass%.

**[Table 11]**

| Reaction composition | Additive amount (ml) | Final concentration |
|---|---|---|
| 250 mM Phosphate buffer (pH 6.0) | 1 | 50 mM |
| 0.1 mass% or 1 mass% Mediator | 0.5 | 0.01 mass% or 0.1 mass% |
| 2 mM or 20 mM DL-Methionine or L-methionine | 2.5 | 1 mM or 10 mM |
| 0.05 mass% or 0.5 mass% Laccase solution | 1 | 0.01 mass% (12 U/mL) or 0.1 mass% (120 U/mL) |

After 0.8 g of NaCl had been dissolved in 4 ml of the reaction solution, solid-phase extraction was carried out using SPME Arrow, and a product was then analyzed by GC-MS.

**[Table 12]**

| No. | Substrate | Substrate concentration (mM) | Mediator | Mediator concentration (mass%) | Enzyme concentration (mass%) | Methional (ppm) |
|---|---|---|---|---|---|---|
| 1 | DL-Methionine | 10 | Apple polyphenol | 0.10 | 0.10 | 48.5 |
| 2 | | 1 | | | | 9.8 |
| 3 | | 10 | | | 0.01 | 18.4 |
| 4 | | 1 | | | | 3.7 |
| 5 | | 10 | | 0.01 | 0.10 | 12.8 |
| 6 | | 1 | | | | 2.4 |
| 7 | L-Methionine | 10 | | 0.10 | | 51.4 |
| 8 | | 1 | | | | 6.9 |
| 9 | DL-Methionine | 10 | Green coffee bean extract | 0.10 | | 31.4 |
| 10 | | 1 | | | | 5.8 |
| 11 | | 10 | | 0.01 | | 8.4 |
| 12 | | 1 | | | | 2.6 |

Methional was generated whether DL-methionine or L-methionine was used as a substrate. When the additive amount of the enzyme was 0.1 mass% (120 U), the amount of methional produced tended to increase. When the additive amount of the mediator was 0.1 mass%, the amount of methional produced tended to increase.

### (Test Example 4)

Methionine was used as a substrate, various types of mediators were allowed to act thereon, and studies were conducted.

To a 15-ml centrifuge tube, 1 ml of 250 mM phosphate buffer (pH 6.0), 2.5 ml of 20 mM DL-methionine, 0.5 ml of 10 mM or 1 mass% each of various types of mediator solutions, and 1 ml of 0.5 mass% laccase solution were added, and thereafter, the reaction was carried out by shaking at 50°C for 1 hour. After completion of the reaction, the enzyme was inactivated by a boiling treatment for 10 minutes. It is to be noted that the mediator was dissolved in water or ethanol, and was then added to a final concentration of 1 mM or 0.1 mass%.

**[Table 13]**

| Reaction composition | Additive amount (ml) | Final concentration |
|---|---|---|
| 250 mM Phosphate buffer (pH 6.0) | 1 | 50 mM |
| 10 mM or 1 mass% Mediator | 0.5 | 1 mM or 0.1 mass% |
| 20 mM DL-Methionine | 2.5 | 10 mM |
| 0.5 mass% Laccase solution | 1 | 0.1 mass% (120 U /ml) |

After 0.8 g of NaCl had been dissolved in 4 ml of the reaction solution, solid-phase extraction was carried out using SPME Arrow, and a product was then analyzed by GC-MS.

**[Table 14]**

| | | Mediator | Methional (ppm) |
|---|---|---|---|
| Comp. Ex. | 1 | Ethanol | 0.00 |
| Comp. Ex. | 2 | Water | 0.00 |
| Example | 1 | Pectin | 0.21 |
| Example | 2 | Hesperidin | 0.23 |
| Example | 3 | Isoeugenol | 0.49 |
| Example | 4 | Butylhydroxyanisole | 0.52 |
| Example | 5 | Eugenol | 0.55 |
| Example | 6 | Vanillin | 0.68 |
| Example | 7 | Ferulic acid | 0.93 |
| Example | 8 | L-Cysteine hydrochloride | 1.02 |
| Example | 9 | Curcumin | 1.34 |
| Example | 10 | Sodium erythorbate | 3.18 |
| Example | 11 | L-Ascorbic acid | 3.26 |
| Example | 12 | L-DOPA | 3.26 |
| Example | 13 | Pyrogallol | 8.94 |
| Example | 14 | Lemon Vernena extract | 10.39 |
| Example | 15 | Tea extract (EGCG 70%) | 11.08 |
| Example | 16 | DL-Catechin | 11.29 |
| Example | 17 | Gallic acid monohydrate | 15.77 |
| Example | 18 | Green coffee bean extract P | 21.03 |
| Example | 19 | Rutin | 27.83 |
| Example | 20 | Tannic acid | 28.33 |
| Example | 21 | Apple polyphenol | 38.97 |
| Example | 22 | Caffeic acid | 40.47 |
| Example | 23 | Chlorogenic acid | 44.86 |

The amount of methional generated tended to be higher when green coffee bean extract P, rutin, tannic acid, apple polyphenol, caffeic acid, or chlorogenic acid was used as a mediator. It was assumed that the amount of methional generated increased when the mediator contained a catechol structure.

### (Test Example 5)

The amount of the mediator and the amount of the enzyme were examined when phenylalanine was used as a substrate.

To a 15-ml centrifuge tube, 1 ml of 250 mM phosphate buffer (pH 6.0), 2.5 ml of 0.2 mM, 2 mM or 20 mM L-phenylalanine, 0.5 ml of 0.1 mass% or 1 mass% apple polyphenol, and 1 ml of 0.05 mass% or 0.5 mass% laccase solution were added, and thereafter, the reaction was carried out by shaking at 50°C for 1 hour. After completion of the reaction, the enzyme was inactivated by a boiling treatment for 10 minutes.

**[Table 15]**

| Reaction composition | Additive amount (ml) | Final concentration |
|---|---|---|
| 250 mM Phosphate buffer (pH 6.0) | 1 | 50 mM |
| 0.1 mass% or 1 mass% Apple polyphenol solution | 0.5 | 0.01 mass% or 0.1 mass% |
| 0.2 mM, 2 mM or 20 mM L-Phenylalanine solution | 2.5 | 0.1 mM, 1 mM or 10 mM |
| 0.05 mass% or 0.5 mass% Laccase solution | 1 | 0.01 mass% (12 U/mL) or 0.1 mass% (120 U/mL) |

After 0.8 g of NaCl had been dissolved in 4 ml of the reaction solution, solid-phase extraction was carried out using SPME Arrow, and a product was then analyzed by GC-MS.

**[Table 16]**

| No. | L-Phenylalanine (mM) | Apple polyphenol (mass%) | Enzyme concentration (mass%) | Benzaldehyde (ppm) | Phenylacetaldehyde (ppm) |
|---|---|---|---|---|---|
| 1 | 10 | 0.10 | 0.10 | 0.51 | 20.77 |
| 2 | 1 | 0.10 | 0.10 | 0.13 | 5.40 |
| 3 | 0.1 | 0.10 | 0.10 | 0.02 | 0.37 |
| 4 | 10 | 0.10 | 0.01 | 0.11 | 30.01 |
| 5 | 1 | 0.10 | 0.01 | 0.04 | 6.60 |
| 6 | 0.1 | 0.10 | 0.01 | 0.01 | 0.42 |
| 7 | 10 | 0.01 | 0.10 | 0.12 | 4.19 |
| 8 | 1 | 0.01 | 0.10 | 0.03 | 0.94 |
| 9 | 0.1 | 0.01 | 0.10 | 0.00 | 0.15 |
| 10 | 10 | 0.01 | 0.01 | 0.06 | 10.39 |
| 11 | 1 | 0.01 | 0.01 | 0.02 | 2.06 |
| 12 | 0.1 | 0.01 | 0.01 | 0.01 | 0.23 |

Phenylacetaldehyde and benzaldehyde were generated from phenylalanine. When the additive amount of the enzyme was 0.01 mass% (12 U), the amount of phenylacetaldehyde generated tended to increase. When the additive amount of the mediator was 0.1 mass%, the amount of phenylacetaldehyde generated tended to increase.

### (Test Example 6)

Phenylalanine was used as a substrate, various types of mediators were allowed to act on the phenylalanine, and studies were conducted.

To a 15-ml centrifuge tube, 1 ml of 250 mM phosphate buffer (pH 6.0), 2.5 ml of 20 mM phenylalanine, 0.5 ml of 10 mM or 1 mass% each of various types of mediator solutions, and 1 ml of 0.5 mass% laccase solution were added, and thereafter, the reaction was carried out by shaking at 50°C for 1 hour. After completion of the reaction, the enzyme was inactivated by a boiling treatment for 10 minutes. It is to be noted that the mediator was dissolved in water or ethanol, and was then added to a final concentration of 1 mM or 0.1 mass%.

**[Table 17]**

| Reaction composition | Additive amount (ml) | Final concentration |
|---|---|---|
| 250 mM Phosphate buffer (pH 6.0) | 1 | 50 mM |
| 10 mM or 1 mass% Mediator | 0.5 | 1 mM or 0.1 mass% |
| 20 mM L-Phenylalanine | 2.5 | 10 mM |
| 0.5 mass% Laccase solution | 1 | 0.1 mass% (120 U/ml) |

After 0.8 g of NaCl had been dissolved in 4 ml of the reaction solution, solid-phase extraction was carried out using SPME Arrow, and a product was then analyzed by GC-MS.

**[Table 18]**

| | | Mediator | Benzaldehyde (ppm) | Phenylacetaldehyde (ppm) |
|---|---|---|---|---|
| Comp. Ex. | 101 | Ethanol | 0.00 | 0.00 |
| Comp. Ex. | 102 | Water | 0.00 | 0.00 |
| Example | 101 | SBP | 0.07 | 0.10 |
| Example | 102 | L-Cysteine hydrochloride | 0.11 | 0.77 |
| Example | 103 | Isoeugenol | 0.83 | 0.85 |
| Example | 104 | Eugenol | 0.38 | 0.91 |
| Example | 105 | Hesperidin | 0.24 | 0.94 |
| Example | 106 | Curcumin | 0.33 | 0.97 |
| Example | 107 | Butylhydroxyanisole | 0.20 | 1.17 |
| Example | 108 | Ferulic acid | 0.74 | 2.39 |
| Example | 109 | Vanillin | 0.36 | 2.65 |
| Example | 110 | Sodium erythorbate | 0.41 | 2.79 |
| Example | 111 | L-Ascorbic acid | 0.40 | 3.06 |
| Example | 112 | Tea extract (EGCG 70%) | 0.49 | 8.37 |
| Example | 113 | Pyrogallol | 1.05 | 8.53 |
| Example | 114 | L-DOPA | 0.65 | 9.02 |
| Example | 115 | Chlorogenic acid | 3.14 | 10.14 |
| Example | 116 | Tannic acid | 0.67 | 10.51 |
| Example | 117 | DL-Catechin | 0.82 | 10.96 |
| Example | 118 | Rutin | 1.02 | 13.81 |
| Example | 119 | Caffeic acid | 2.93 | 15.61 |
| Example | 120 | Lemon Vernena extract | 2.40 | 15.68 |
| Example | 121 | Green coffee bean extract P | 2.79 | 16.27 |
| Example | 122 | Gallic acid monohydrate | 2.04 | 16.42 |
| Example | 123 | Apple polyphenol | 2.96 | 23.23 |

The amount of phenylacetaldehyde generated tended to be higher when green coffee bean extract P, gallic acid monohydrate, or apple polyphenol was used as a mediator. It was assumed that the amount of phenylacetaldehyde generated would increase in a case where the mediator contained a catechol structure.

### (Test Example 7)

Application to food products and beverages was confirmed.

As mediators (reduction substrates), substrates (food products and beverages), and enzymes, the compounds shown in the following table were used, respectively.

**[Table 19]**

| Type | Product name | Manufacturer |
|---|---|---|
| Product | Phenylacetaldehyde (PAA) | Combi-Blocks |
| Mediator | Apple Polyphenol | Frontier Foods, INC. |
| Mediator | Recoverben Lemon Verbena Extract | Vital Solutions GmbH |
| Mediator | Green Coffee Bean Extract P | Oryza Oil & Fat Chemical Co., Ltd. |
| Mediator | Sunfood 100 (tea extract) | Mitsubishi Chemical Corporation |
| Mediator | Tea Extract (EGCG70%) | Sankt Co., Ltd. |
| Substrate | Delicious Plain Soy Milk (soybean: soy milk) | KIKKOMAN SOYFOODS CO., LTD. |
| Substrate | Oat Drink Barista Edition (oat milk) | Oatly |
| Substrate | Almond Breeze (almond milk) | POKKA SAPPORO FOOD & BEVERAGE LTD. |
| Substrate | Delicious wine with no added antioxidative, Dark red (wine: grape) | SUNTORY |
| Substrate | DUG POTATO (potato milk) | DUG |
| Substrate | WUNDA (PEA) (pea milk) | Nestle |
| Substrate | Organic coconut milk sugar-free (coconut milk) | Ecomil |
| Enzyme | Laccase derived from *Trametes* sp. | Amano Enzyme Inc. |

To a 15-ml centrifuge tube, 8 ml of the food product and beverage, 1 ml of 1 mass% mediator solution, and 1 ml of 0.5 mass% laccase solution were added, and thereafter, the reaction was carried out by shaking at 50°C for 1 hour. After completion of the reaction, the enzyme was inactivated by a boiling treatment for 10 minutes.

**[Table 20]**

| Reaction composition | Additive amount (ml) | Final concentration |
|---|---|---|
| Food product and beverage | 8 | |
| 1 mass% Mediator solution | 1 | 0 mass% or 0.1 mass% |
| 1 mass% Laccase solution | 1 | 0 mass% or 0.1 mass% (120 U/mL) |

After 0.8 g of NaCl had been dissolved in 4 ml of the reaction solution, solid-phase extraction was carried out using SPME Arrow, and a product was then analyzed by GC-MS. The analysis conditions were as follows.

### SPME Arrow (solid-phase extraction) common

Fiber used: DVB/PDMS/CAR, 1 cm
Extraction conditions: 50°C, 30 minutes of incubation → 50°C, 30 minutes of adsorption → 240°C, 1 minute of desorption
Bake conditions: 250°C, 30 minutes

### GC-MS OP-2020NX

Column: InertCap pure-WAX (30 m, 0.25 mm, 0.25 µm)
GC conditions: Temperature increase: 60°C, 2 min, 10°C/min to 170°C, 20°C/min to 240°C, 240°C 10 min injection port: 250°C
MS conditions: Measurement mode: SIM, monitor ion m/z 65, 91, 120

**[Table 21]**

| No. | Material | Mediator | Enzyme | Phenylacetaldehyde (ppm) |
|---|---|---|---|---|
| 1 | Soy milk | - | - | 0.004 |
| 2 | Soy milk | Green coffee bean extract P | - | 0.010 |
| 3 | Soy milk | Apple Polyphenol | - | 0.004 |
| 4 | Soy milk | Sunfood 100 | - | 0.005 |
| 5 | Soy milk | Tea Extract (EGCG 70%) | - | 0.004 |
| 6 | Soy milk | Recoverben | - | 0.003 |
| 7 | Soy milk | Green coffee bean extract P | + | 0.019 |
| 8 | Soy milk | Apple Polyphenol | + | 0.021 |
| 9 | Soy milk | Sunfood 100 | + | 0.012 |
| 10 | Soy milk | Tea Extract (EGCG 70%) | + | 0.013 |
| 11 | Soy milk | Recoverben | + | 0.006 |

| | | | | |
|---|---|---|---|---|
| (Soy milk = Delicious Plain Soy Milk) (+ indicates "added", and - indicates "not-added" (*water was added instead)) | | | | |

It was confirmed that the amount of phenylacetaldehyde generated increased when Green Coffee Bean Extract P, Apple Polyphenol, Sunfood, Tea Extract, and Recoverben used as mediators were each allowed to coexist with soy milk, followed by performing an enzyme reaction. In particular, the amount of phenylacetaldehyde generated tended to increase, when apple polyphenol or green coffee bean extract was used as a mediator.

**[Table 22]**

| No. | Material | Mediator | Enzyme | Phenylacetaldehyde (ppm) |
|---|---|---|---|---|
| 1 | Oat | - | - | 0.002 |
| 2 | Oat | Green Coffee Bean Extract P | - | 0.005 |
| 3 | Oat | Green Coffee Bean Extract P | + | 0.010 |

| | | | | |
|---|---|---|---|---|
| (Oat = Oat Drink Barista Edition) (+ indicates "added", and - indicates "not-added" (*water was added instead)) | | | | |

It was confirmed that the amount of phenylacetaldehyde increased when Green Coffee Bean Extract P used as a mediator was allowed to coexist with oat milk, followed by performing an enzyme reaction.

**[Table 23]**

| No. | Material | Mediator | Enzyme | Phenylacetaldehyde (ppm) |
|---|---|---|---|---|
| 1 | Almond milk | - | - | 0.001 |
| 2 | Almond milk | Apple Polyphenol | - | 0.001 |
| 3 | Almond milk | Green Coffee Bean Extract P | - | 0.005 |
| 4 | Almond milk | Apple Polyphenol | + | 0.041 |
| 5 | Almond milk | Green Coffee Bean Extract P | + | 0.020 |

| | | | | |
|---|---|---|---|---|
| (Almond milk = Almond Breeze) (+ indicates "added", and - indicates "not-added" (*water was added instead)) | | | | |

It was confirmed that the amount of phenylacetaldehyde increased when Apple Polyphenol and Green Coffee Bean Extract P used as mediators were each allowed to coexist with almond milk, followed by performing an enzyme reaction.

### (Test Example 8)

Further, application to food products and beverages was confirmed.

To a 15-ml centrifuge tube, 8 ml of the food product and beverage shown in Table 19, 1 ml of 1 mass% apple polyphenol, and 1 ml of 1 mass% laccase solution were added, and thereafter, the reaction was carried out by shaking at 50°C for 1 hour. After completion of the reaction, the enzyme was inactivated by a boiling treatment for 10 minutes.

**[Table 24]**

| Reaction composition | Additive amount (ml) | Final concentration |
|---|---|---|
| Food product and beverage | 8 | |
| 1 mass% Apple polyphenol | 1 | 0 mass% or 0.1 mass% |
| 1 mass% Laccase solution | 1 | 0 mass% or 0.1 mass% (120 /mL) |

After 0.8 g of NaCl had been dissolved in 4 ml of the reaction solution, solid-phase extraction was carried out using SPME Arrow, and a product was then analyzed by GC-MS.

**[Table 25]**

| | Material | Apple polyphenol | Enzyme | Phenylacetaldehyde (ppm) |
|---|---|---|---|---|
| 1 | Potato milk | - | - | 0.004 |
| 2 | Pea milk | - | - | 0.006 |
| 3 | Coconut milk | - | - | 0.003 |
| No. 4 | Potato milk | + | - | 0.003 |
| 5 | Pea milk | + | - | 0.007 |
| 6 | Coconut milk | + | - | 0.004 |
| 7 | Potato milk | + | + | 0.010 |
| 8 | Pea milk | + | + | 0.009 |
| 9 | Coconut milk | + | + | 0.019 |

| | | | | |
|---|---|---|---|---|
| (+ indicates "added", and - indicates "not-added" (*water was added instead)) (Potato milk = DUG POTATO, pea milk = WUNDA, and coconut milk =Organic coconut milk sugar-free) | | | | |

It was confirmed that the amount of phenylacetaldehyde increased when apple polyphenol used as a mediator was allowed to coexist with each of potato milk, pea milk and coconut milk, followed by performing an enzyme reaction.

**[Table 26]**

| No. | Material | Apple polyphenol | Enzyme | Phenylacetaldehyde (ppm) |
|---|---|---|---|---|
| 1 | Wine | - | - | 0.005 |
| 2 | Wine | - | + | 0.007 |
| 3 | Wine | + | - | 0.006 |
| 4 | Wine | + | + | 0.012 |

| | | | | |
|---|---|---|---|---|
| (Wine = Delicious wine with no added antioxidative, Dark red) (+ indicates "added", and - indicates "not-added" (*water was added instead)) | | | | |

It was confirmed that the amount of phenylacetaldehyde increased when apple polyphenol used as a mediator was allowed to coexist with wine, followed by performing an enzyme reaction.

### (Test Example 9)

### (Materials used)

As mediators (reduction substrates), substrates and enzymes, the compounds shown in the following table were each used.

**[Table 27]**

| Type | Product name | Manufacturer |
|---|---|---|
| Product | Phenylacetaldehyde (PAA) | Combi-Blocks |
| Mediator | Apple Polyphenol | Frontier Foods, INC. |
| Mediator | Tea Extract (EGCG70%) | Sanct Co., Ltd. |
| Amino acid | L-Phenylalanine | Frontier Foods, INC. |
| Substrate (beverage) | Delicious Plain Soy Milk (soy milk) | KIKKOMAN SOYFOODS CO., LTD. |
| Substrate (beverage) | Nescafe Gold Blend (coffee) | Nestle |
| Enzyme | Laccase derived from *Trametes sp.* | Amano Enzyme Inc. |

Aldehyde compound-generating compositions were prepared with the compositions shown in the following table.

**[Table 28]**

| Material (final concentration) | Composition No. 1 | Composition No. 2 | Composition No. 3 | Composition No. 4 |
|---|---|---|---|---|
| Laccase | 120,000 U/g | | | |
| L-Phenylalanine | - | 600 mM | 600 mM | 600 mM |
| Apple polyphenol | - | - | 10% | - |
| Tea extract (EGCG 70%) | - | - | - | 10% |

To a 15-ml centrifuge tube, 9 ml of the beverage and 1 ml of 1 mass% the aldehyde compound-generating composition obtained above were added, and thereafter, the reaction was carried out by shaking at 50°C for 1 hour. After completion of the reaction, the enzyme was inactivated by a boiling treatment for 10 minutes.

**[Table 29]**

| Material | Additive amount (mL) | Final concentration |
|---|---|---|
| Beverage (soy milk or coffee) | 9 | |
| 1 mass% Aldehyde compound-generating composition | 1 | 0 mass% or 0.1 mass% (laccase: 120 U/mL) |

After 0.8 g of NaCl had been dissolved in 4 mL of the reaction solution, solid-phase extraction was carried out using SPME Arrow, and a product was then analyzed by GC-MS. The analysis conditions were as follows.

### Conditions for GC-MS of phenylacetaldehyde

### SPME Arrow (solid-phase extraction) common

Fiber used: DVB/PDMS/CAR, 1 cm
Extraction conditions: 50°C, 30 minutes of incubation → 50°C, 30 minutes of adsorption → 240°C, 1 minute of desorption
Bake conditions: 250°C, 30 minutes

### GC-MS QP-2020NX

Column: InertCap pure-WAX (30 m, 0.25 mm, 0.25 µm)
GC conditions: Temperature increase: 60°C, 2 min, 10°C/min to 170°C, 20°C/min to 240°C, 240°C 10 min injection port: 250°C
MS conditions: Measurement mode: SIM, monitor ion m/z 65, 91, 120

### (Results)

**[Table 30]**

| Conditions | Material | Aldehyde compound-generating Composition No. | PAA (ppm) |
|---|---|---|---|
| 1 | Coffee | None | 0.027 |
| 2 | Coffee | No. 1 | 0.025 |
| 3 | Coffee | No. 2 | 0.799 |
| 4 | Coffee | No. 3 | 0.885 |
| 5 | Coffee | No. 4 | 0.742 |
| 6 | Soy milk | None | 0.005 |
| 7 | Soy milk | No. 1 | 0.004 |
| 8 | Soy milk | No. 2 | 0.014 |
| 9 | Soy milk | No. 3 | 0.037 |
| 10 | Soy milk | No. 4 | 0.045 |

| | | | |
|---|---|---|---|
| * Water was added instead of the composition under conditions of "None". | | | |

By adding an aldehyde compound-generating composition containing multicopper oxidase and an amino acid to the food product, generation of phenylacetaldehyde (PAA) was confirmed.

### (Test Example 10)

Furthermore, application to food products and beverages, to which an amino acid had been added, was confirmed.

As mediators (reduction substrates), amino acids, substrates and enzymes, the compounds shown in the following table were each used. It is to be noted that *Oi Ocha* was dissolved in water to 1% (W/V) and was then used, that Nescafe Gold Blend was dissolved in water to 2% (W/V) and was then used, and that other materials were directly used as were.

**[Table 31]**

| Type | Product name | Manufacturer |
|---|---|---|
| Product | Phenylacetaldehyde (PAA) | Combi-Blocks |
| Product | Methional (MTN) | Sigma-Aldrich |
| Mediator | Apple polyphenol powder | Frontier Foods, INC. |
| Amino acid | L-phenylalanine (L-Phe) | FUJIFILM Wako Pure Chemical Corp. |
| Amino acid | DL-methionine (DL-Met) | FUJIFILM Wako Pure Chemical Corp. |
| Substrate (green tea) | *Oi Ocha,* Smooth powdery green tea with *matcha* | ITO EN, LTD. |
| Substrate (wine) | Delicious wine with no added antioxidative, Dark red | SUNTORY |
| Substrate (oat milk) | Oat Drink Barista Edition | Oatly |
| Substrate (soy milk) | Delicious Plain Soy Milk | KIKKOMAN SOYFOODS CO., LTD. |
| Substrate (coffee) | Nescafe Gold Blend | Nestle |
| Enzyme | Laccase derived from *Trametes* sp. | Amano Enzyme Inc. |

To a 15-ml centrifuge tube, 4 ml of the food products and beverages, 0.25 ml of 2 mass% apple polyphenol solution, and 0.5 ml of 1 mass% laccase solution were added, and thereafter, the reaction was carried out by shaking at 50°C for 1 hour. After completion of the reaction, the enzyme was inactivated by a boiling treatment for 10 minutes.

**[Table 32]**

| Reaction composition | Additive amount (ml) | Final concentration |
|---|---|---|
| Food products and beverages (green tea, wine, oat milk, soy milk, or coffee) | 4 | |
| 20 mM Amino acid solution (L-Phe or DL-Met) | 0.25 | 0 mM or1 mM |
| 2 mass% Apple polyphenol solution | 0.25 | 0 mass% or 0.1 mass% |
| 1 mass% Laccase solution | 0.5 | 0 mass% or 0.1 mass% (120 U/mL) |

After 0.8 g of NaCl had been dissolved in 4 ml of the reaction solution, solid-phase extraction was carried out using SPME Arrow, and an analysis was then made by GC-MS.

### GC-MS QP-2020NX (PAA analysis)

Column: InertCap pure-WAX (30 m, 0.25 mm, 0.25 µm)
GC conditions: Temperature increase: 60°C, 2 min, 10°C/min to 170°C, 20°C/min to 240°C, 240°C 10 min injection port: 250°C
MS conditions: Measurement mode: SIM, monitor ion m/z 65, 91, 120

### GC-MS QP-2020NX (MTN analysis)

Column: InertCap pure-WAX (30 m, 0.25 mm, 0.25 µm)
GC conditions: Temperature increase: 40°C, 4 min, 10°C/min to 170°C, 20°C/min to 240°C, 240°C 10 min injection port: 250°C
MS conditions: Measurement mode: SIM, monitor ion m/z 76, 104

**[Table 33]**

| Green tea | | | | |
|---|---|---|---|---|
| Condition | L-Phe | Apple polyphenol | Enzyme | PAA (ppm) |
| 1 | - | - | - | 0.002 |
| 2 | - | - | + | 0.006 |
| 3 | - | + | - | 0.002 |
| 4 | - | + | + | 0.026 |
| 5 | + | - | + | 1.420 |
| 6 | + | + | + | 4.446 |

| | | | | |
|---|---|---|---|---|
| (+ indicates "added", and - indicates "not-added" (*water was added instead)) | | | | |

The amount of PAA generated was improved by allowing the enzyme to act on the beverage (Condition 1 vs. Condition 2). In addition, the amount of PAA generated was improved by allowing the enzyme to act on the beverage in the presence of polyphenol (Condition 2 vs. Condition 4). Moreover, the amount of PAA generated was improved by allowing the enzyme to act on the beverage in the presence of L-Phe (Condition 2 vs. Condition 5). Furthermore, the amount of PAA generated was further improved by allowing the enzyme to act on the beverage in the presence of L-Phe and polyphenol (Conditions 4 and 5 vs. Condition 6).

**[Table 34]**

| Wine | | | | |
|---|---|---|---|---|
| Condition | L-Phe | Apple polyphenol | Enzyme | PAA (ppm) |
| 1 | - | - | - | 0.006 |
| 2 | - | - | + | 0.008 |
| 3 | - | + | - | 0.005 |
| 4 | - | + | + | 0.028 |
| 5 | + | - | + | 0.765 |
| 6 | + | + | + | 1.284 |

| | | | | |
|---|---|---|---|---|
| (+ indicates "added", and - indicates "not-added" (*water was added instead)) | | | | |

PAA was generated by allowing the enzyme to act on the beverage (Condition 1 vs. Condition 2). In addition, the amount of PAA generated was improved by allowing the enzyme to act on the beverage in the presence of polyphenol (Condition 2 vs. Condition 4). Moreover, the amount of PAA generated was improved by allowing the enzyme to act on the beverage in the presence of L-Phe (Condition 2 vs. Condition 5). Furthermore, the amount of PAA generated was further improved by allowing the enzyme to act on the beverage in the presence of L-Phe and polyphenol (Conditions 4 and 5 vs. Condition 6).

**[Table 35]**

| Oat milk | | | | |
|---|---|---|---|---|
| Condition | L-Phe | Apple polyphenol | Enzyme | PAA (ppm) |
| 1 | - | - | - | 0.001 |
| 2 | + | - | + | 0.100 |
| 3 | + | + | + | 0.211 |

| | | | | |
|---|---|---|---|---|
| (+ indicates "added", and - indicates "not-added" (*water was added instead)) | | | | |

PAA was generated by allowing the enzyme to act on the beverage in the presence of L-Phe (Condition 2). Moreover, the amount of PAA generated was improved by allowing the enzyme to act on the beverage in the presence of L-Phe and polyphenol (Condition 3).

**[Table 36]**

| Coffee | | | | |
|---|---|---|---|---|
| Condition | L-Phe | Apple polyphenol | Enzyme | PAA (ppm) |
| 1 | - | - | - | 0.008 |
| 2 | - | - | + | 0.015 |
| 3 | - | + | - | 0.008 |
| 4 | - | + | + | 0.025 |
| 5 | + | - | + | 3.012 |
| 6 | + | + | + | 3.032 |

| | | | | |
|---|---|---|---|---|
| (+ indicates "added", and - indicates "not-added" (*water was added instead)) | | | | |

PAA was generated by allowing the enzyme to act on the beverage (Condition 1 vs. Condition 2). In addition, the amount of PAA generated was improved by allowing the enzyme to act on the beverage in the presence of polyphenol (Condition 2 vs. Condition 4). Moreover, the amount of PAA generated was improved by allowing the enzyme to act on the beverage in the presence of L-Phe (Condition 2 vs. Condition 5).

**[Table 37]**

| Green tea | | | | |
|---|---|---|---|---|
| Condition | DL-Met | Apple polyphenol | Enzyme | MTN (ppm) |
| 1 | - | - | - | N.D. |
| 2 | + | - | + | 1.252 |
| 3 | + | + | + | 2.493 |

| | | | | |
|---|---|---|---|---|
| (+ indicates "added", and - indicates "not-added" (*water was added instead)) (N.D.: Not detected) | | | | |

Methional was generated by allowing the enzyme to act on the beverage in the presence of DL-Met (Condition 2). The amount of methional generated was improved by allowing the enzyme to act on the beverage in the presence of DL-Met and polyphenol (Condition 3).

**[Table 38]**

| Wine | | | | |
|---|---|---|---|---|
| Condition | DL-Met | Apple polyphenol | Enzyme | MTN (ppm) |
| 1 | - | - | - | N.D. |
| 2 | + | - | + | 0.639 |
| 3 | + | + | + | 2.024 |

| | | | | |
|---|---|---|---|---|
| (+ indicates "added", and - indicates "not-added" (*water was added instead)) (N.D.: Not detected) | | | | |

Methional was generated by allowing the enzyme to act on the beverage in the presence of DL-Met (Condition 2). The amount of methional generated was improved by allowing the enzyme to act on the beverage in the presence of DL-Met and polyphenol (Condition 3).

**[Table 39]**

| Soy milk | | | | |
|---|---|---|---|---|
| Condition | DL-Met | Apple polyphenol | Enzyme | MTN (ppm) |
| 1 | - | - | - | N.D. |
| 2 | - | + | + | 0.016 |
| 3 | + | - | + | 0.010 |
| 4 | + | + | + | 1.537 |

| | | | | |
|---|---|---|---|---|
| (+ indicates "added", and - indicates "not-added" (*water was added instead)) (N.D.: Not detected) | | | | |

Methional was generated by allowing the enzyme to act on the beverage in the presence of polyphenol (Condition 2). In addition, methional was generated by allowing the enzyme to act on the beverage in the presence of DL-Met (Condition 3). Moreover, the amount of methional generated was improved by allowing the enzyme to act on the beverage in the presence of DL-Met and polyphenol (Condition 4).

**[Table 40]**

| Coffee | | | | |
|---|---|---|---|---|
| Condition | DL-Met | Apple polyphenol | Enzyme | MTN (ppm) |
| 1 | - | - | - | N.D. |
| 2 | + | - | + | 1.249 |
| 3 | + | + | + | 1.061 |

| | | | | |
|---|---|---|---|---|
| (+ indicates "added", and - indicates "not-added" (*water was added instead)) (N.D.: Not detected) | | | | |

Methional was generated by allowing the enzyme to act on the beverage in the presence of DL-Met (Conditions 2 and 3).

## Claims

1. A method for producing an aldehyde compound, including allowing multicopper oxidase to act on food products and beverages or materials for food products and beverages, containing an amino acid or an analogue thereof.

2. The method for producing an aldehyde compound according to claim 1, in which the amino acid or the analogue thereof includes isoleucine.

3. The method for producing an aldehyde compound according to claim 1, in which the amino acid or the analogue thereof includes tryptophan.

4. The method for producing an aldehyde compound according to any one of claims 1 to 3, in which the multicopper oxidase is laccase derived from Trametes sp.

5. The method for producing an aldehyde compound according to any one of claims 1 to 3, in which allowing the multicopper oxidase to act is carried out in the presence of a mediator, and the mediator is a compound containing a ring structure having at least one hydroxyl group.

6. The method for producing an aldehyde compound according to claim 5, in which the mediator is a compound containing a ring structure having at least one hydroxyl group and an alkoxy group, or a compound containing a ring structure having two or more hydroxyl group.

7. An improver for the flavor of food products and beverages, containing a mediator and multicopper oxidase, in which
the mediator is a compound containing a ring structure having at least one hydroxyl group.

8. The improver for the flavor of food products and beverages according to claim 7, in which the multicopper oxidase is laccase derived from Trametes sp.

9. A method for improving the flavor of food products and beverages, including allowing a mediator and multicopper oxidase to act on food products and beverages or materials for food products and beverages, containing an amino acid or an analogue thereof, in which
the mediator is a compound containing a ring structure having at least one hydroxyl group.

10. The method for improving the flavor of food products and beverages according to claim 9, in which the amino acid or the analogue thereof includes isoleucine.

11. The method for improving the flavor of food products and beverages according to claim 9, in which the amino acid or the analogue thereof includes tryptophan.

12. The method for improving the flavor of food products and beverages according to any one of claims 9 to 11, in which the multicopper oxidase is laccase derived from Trametes sp.

13. An aldehyde compound-generating composition, containing multicopper oxidase, and amino acid or a derivative thereof.

14. The aldehyde compound-generating composition according to claim 13, further containing a mediator.

15. The aldehyde compound-generating composition according to claim 14, in which the mediator is a compound containing a ring structure having at least one hydroxyl group.

16. The aldehyde compound-generating composition according to claim 14, in which the mediator is a compound that is contained in at least one type selected from the group consisting of a tea extract and an apple extract.

17. The aldehyde compound-generating composition according to claim 13, in which the multicopper oxidase is laccase.

18. The aldehyde compound-generating composition according to any one of claims 13 to 17, in which the amino acid or the analogue thereof is at least one type selected from the group consisting of methionine, isoleucine, tryptophan and phenylalanine.
